# EUROPEAN PATENT APPLICATION

(11) **EP 2 732 993 A1**
(43) Date of publication of application: **21.05.2014**
(21) Application number: 13192848.3
(22) Date of filing: 14.11.2013
(51) Int. Cl.: B60H 1/00, B60L 11/18, H01M 10/48, H01M 10/61, H01M 10/625, H01M 10/6563, H01M 10/659, H01M 10/663

(54) **Battery pack and vehicle heating apparatus**

(30) Priority: 20.11.2012 JP 2012254558
(71) Applicant: Kabushiki Kaisha Toshiba, Tokyo 105-8001 (JP)
(72) Inventor: Yagi, Ryosuke, Tokyo, 105-8001 (JP); Yoshida, Mitsunobu, Tokyo, 105-8001 (JP); Ishii, Ena, Tokyo, 105-8001 (JP); Sugiyama, Nobukatsu, Tokyo, 105-8001 (JP)
(74) Representative: HOFFMANN EITLE

(57) **Abstract**

According to one embodiment, a battery pack includes a battery module (6) that houses unit cells, a heat storage portion (11) including a heat storage container that houses a heat storage member (13), cooling passages through which heat of the heat storage portion is spread and discharged, and a cooling source that cools the heat storage portion. The heat storage member (13) absorbs heat when changing from solid to liquid and dissipates heat when changing from liquid to solid. The heat storage container (12) is thermally connected to the battery module (6). The cooling source (21) is driven to circulate cooling medium to the cooling passages (18a, 18b), and heat of the heat storage portion (11) discharged through the passages (18a, 18b) are discharged to the outside.

## Description

### CROSS-REFERENCE TO RELATED APPLICATION

This application is based upon and claims the benefit of priority from prior Japanese Patent Application No. 2012-254558, filed November 20, 2012, the entire contents of which are incorporated herein by reference.

### FIELD

Embodiments described herein relate to a battery pack having a heat storage member, and a vehicle heating apparatus including the battery pack.

### BACKGROUND

There has been a proposal to absorb heat generated from a battery by a heat storage member (also referred to as a latent heat storage member), which includes a phase change material that absorbs heat when changing from solid to liquid and dissipates heat when changing from liquid to solid, by disposing the heat storage member in a state of being thermally connected to a battery of a battery pack.

The heat storage member may absorb heat of the battery when a temperature of the heat storage member is lower than a battery temperature. However, when the battery generates heat in a state in which dissolution of the heat storage member from a solid state by heat absorption is finished and a temperature rises, the liquid heat storage member may not absorb heat of the battery. As a result, there is a problem that the temperature of the battery rises abnormally and excessively.

In particular, it is known that a battery of a vehicle battery pack is accompanied by significant heat generation during charging, as compared with heat generation during driving of a vehicle. When the battery temperature excessively rises in accompaniment with charging, there is a problem that the reliability of the battery is lowered, for example, a reduction in the life of the battery is accelerated.

### BRIEF DESCRIPTION OF THE DRAWINGS

FIG. 1 is a cross-sectional plan view illustrating a schematic configuration of a battery pack according to a first embodiment;
FIG. 2 is a perspective view illustrating a first aspect of a cooling passage member of the battery pack of FIG. 1 according to the embodiment;
FIG. 3 is a perspective view illustrating a second aspect of the cooling passage member of the battery pack of FIG. 1 according to the embodiment;
FIG. 4 is a perspective view illustrating a third aspect of the cooling passage member of the battery pack of FIG. 1 according to the embodiment;
FIG. 5 is a diagram schematically illustrating a configuration of a vehicle heating apparatus according to a second embodiment;
FIG. 6 is a flowchart illustrating a control procedure of the vehicle heating apparatus of FIG. 5;
FIG. 7 is a diagram schematically illustrating a configuration of a vehicle heating apparatus according to a third embodiment; and
FIG. 8 is a flowchart illustrating a control procedure of the vehicle heating apparatus of FIG. 7.

### DETAILED DESCRIPTION

### (First Embodiment)

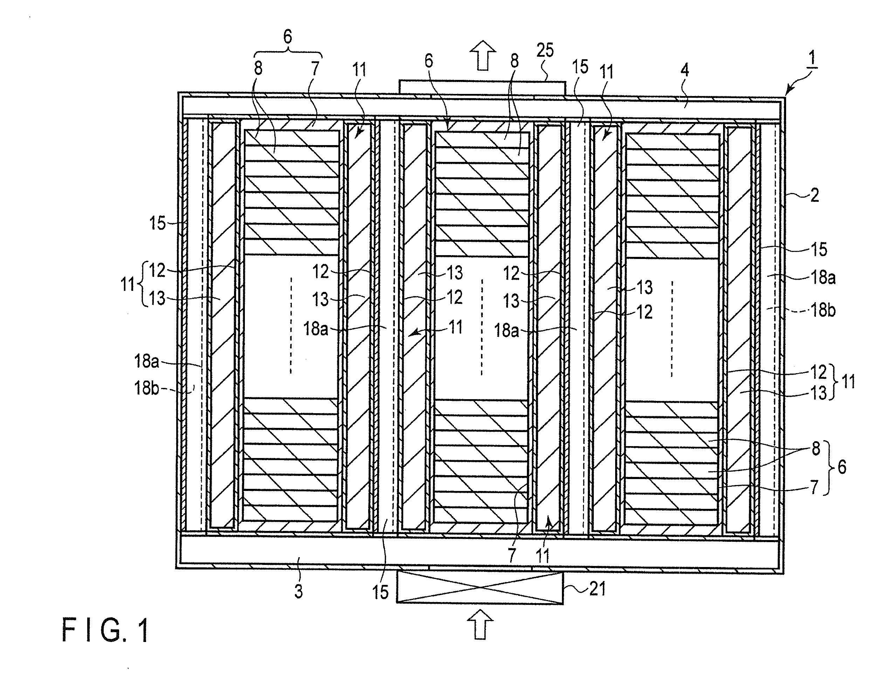

Hereinafter, a battery pack according to a first embodiment will be described in detail with reference to FIGS. 1 to 4.

As illustrated in FIG. 1, the battery pack 1 includes a battery pack case 2, a battery module 6, a heat storage portion 11, a cooling passage member 15, cooling passages 18a and 18b, a cooling source 21, and a medium pass port 25.

The battery pack case 2 includes an intake manifold portion 3, and an exhaust manifold portion 4 corresponding thereto.

The battery module 6 is formed with a module case 7 and a plurality of unit cells 8 each made of a rechargeable battery. The unit cells 8 are received in the module case 7 in a state of being superimposed in a thickness direction of each other, and are arranged to extend in a vertical direction (thickness direction of a paper plane on which FIG. 1 is drawn). At least a battery module 6 is used. For example, in the present embodiment, an example where three battery modules 6 are used is illustrated. The battery modules 6 are received and held in the battery pack case 2 at regular intervals.

In the rechargeable batteries constituting the unit cells 8 received in the battery module 6, various rechargeable batteries may be used. Among the rechargeable batteries, for example, a non-aqueous electrolyte rechargeable battery is a rechargeable battery that performs charging and discharging by movement of lithium ions between a positive electrode and a negative electrode, and may obtain a higher voltage than a nickel-cadmium rechargeable battery or a nickel-hydrogen rechargeable battery using an aqueous solution from the use of an organic solvent in an electrolyte. The non-aqueous electrolyte rechargeable battery, which is being currently commercialized, uses a lithium-containing cobalt composite oxide or a lithium-containing nickel composite oxide as a positive-electrode active material, and a carbon-based material or lithium titanate is used as a negative-electrode active material. However, they are not limited to these.

The heat storage portion 11 is received in the battery pack case 2 in a state in which the battery module 6 is interposed between both sides of each battery module 6. The heat storage portion 11 includes a heat storage container 12 and a heat storage member 13 filled within the container.

The heat storage container 12 is made of a material that may be deformed according to a volume change of the heat storage member 13. The heat storage member 13 uses a latent heat storage member including a phase change material that absorbs heat when changing from solid to liquid at a melting point and dissipates heat when changing from liquid to solid. Examples of the heat storage member may include paraffin, sodium sulfate hydrate, sodium acetate hydrate, and the like.

The heat storage portion 11 is disposed in a state in which the heat storage container 12 is thermally connected to a side of the module case 7 in a thickness direction. The phrase "thermally connected" refers to a state in which the battery module 6 and the heat storage portion 11 are connected such that heat exchange can be achieved by heat conduction.

The cooling passage member 15 is received in the battery pack case 2, with the heat storage portion 11 interposed between the battery modules 6 contacting the heat storage portion 11 and the cooling passage member 15. The cooling passage member 15 is disposed in a stage of being thermally connected to the heat storage container 12. The phrase "thermally connected" refers to a state in which the cooling passage member 15 and the heat storage portion 11 are connected such that heat exchange can be achieved by heat conduction.

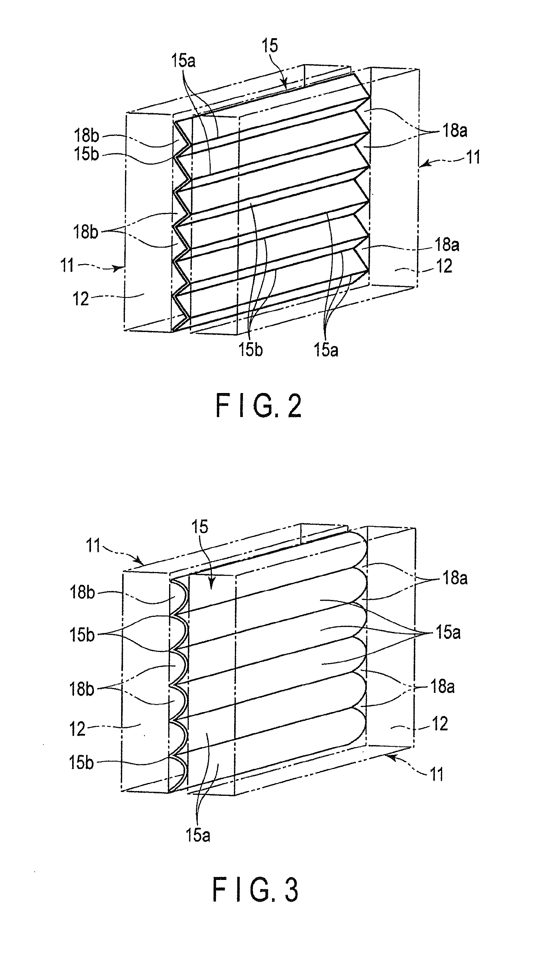

A first aspect of the cooling passage member 15 is illustrated in FIG. 2. The cooling passage member 15 is formed by bending a metal sheet having a good heat conductivity, such as a copper plate or an aluminum plate, to an elastically deformable state. For example, the cooling passage member 15 of the example of FIG. 2 is formed by bending the metal sheet in a zigzag shape. Specifically, the cooling passage member 15 includes a plurality of contact portions 15a parallel to one another and a plurality of contact portions 15b parallel to one another, and the cooling passage member 15 is alternately bent in opposite directions, with the contact portions 15a and 15b as a starting point.

The cooling passage member 15 brings each of the contact portions 15a into contact with a side of the heat storage container 12, brings each of the contact portions 15b into contact with a side of another heat storage container 12 or a sidewall of the battery pack case 2, and is disposed between them in an elastically deformed state. The cooling passage member 15 disposed in this manner is elastically deformable in a direction perpendicular to the side of the heat storage container 12 with which the member is contacted. During the elastic deformation, the cooling passage member 15 is accompanied by expansion and contraction in a vertical direction in FIG 2.

A cooling passage member 15 of a second aspect illustrated in FIG. 3 is formed by bending a metal sheet having a good heat conductivity, such as a copper plate or an aluminum plate, in a continuous arc shape. A region where semicircular arc portions of the cooling passage member 15 are continuous forms a plurality of contact portions 15b parallel to one another, and apexes of the respective semicircular arc portions form a plurality of contact portions 15a parallel to one another. Like the cooling passage member 15 of the first aspect, the cooling passage member 15 of the second aspect brings each of the contact portions 15a into contact with a side of the heat storage container 12, brings each of the contact portions 15b into contact with a side of another heat storage container 12 or a sidewall of the battery pack case 2, and is disposed between them in an elastically deformed state.

The cooling passage 18a within the battery pack case 2 is partitioned by the adjacent contact portions 15a of the cooling passage member 15 illustrated in FIG. 2 and the side of the heat storage container 12 contacting them, and the cooling passage 18b within the battery pack case 2 is partitioned by the adjacent contact portions 15b of the cooling passage member 15 and the side of the heat storage container 12 contacting them.

Likewise, in the case of using the cooling passage member 15 illustrated in FIG. 3, the cooling passage 18a within the battery pack case 2 is partitioned by the adjacent contact portions 15a of the cooling passage member 15 and the side of the heat storage container 12 contacting them, and the cooling passage 18b within the battery pack case 2 is partitioned by the adjacent contact portions 15b of the cooling passage member 15 and the side of the heat storage container 12 contacting them.

Each of the cooling passages 18a and 18b faces the heat storage portion 11. Also, the cooling passage 18a or 18b is partitioned by the adjacent contact portions 15a or 15b of the cooling passage member 15 and the sidewall of the battery pack case 2 contacting them. Each of the cooling passages 18a and 18b facing the sidewall of the battery pack case 2 is partitioned so as not to face the heat storage portion 11.

In each of the cooling passages 18a and 18b formed within the battery pack case 2 as described above, heat generated by each of the unit cells 8 of the battery module 6 is spread and discharged via the module case 7. As illustrated in FIG. 1, an end of each of the cooling passages 18a and 18b is opened to the intake manifold portion 3, and the other end of each of the cooling passages 18a and 18b is opened to the exhaust manifold portion 4. That is, the intake manifold portion 3 and the exhaust manifold portion 4 communicate with each other via each of the cooling passages 18a and 18b.

Also, the contact portions 15a and 15b of the cooling passage member 15 may be formed in a planar shape.

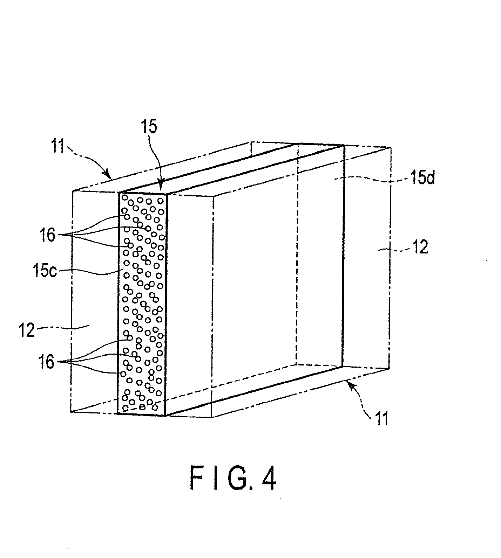

A cooling passage member 15 of a third aspect illustrated in FIG. 4 is formed in a rectangular parallelepiped shape having a predetermined thickness by a porous material. A plurality of holes included in the cooling passage member 15 forms a cooling air passage, an end and the other end thereof are opened to sides 15c and 15d of the porous material (cooling passage member 15) that are parallel to each other, respectively. As a representative of this opening, an opening 16 of the hole (cooling air passage) opened to the side 15c is illustrated in FIG. 4. The cooling passage member 15 of the third aspect may be accompanied by deformation of the plurality of holes (cooling air passage) included therein and be elastically deformed in a thickness direction.

The cooling passage member 15 of the third aspect brings a side thereof into contact with the side of the heat storage container 12, brings the other side parallel to the a side into contact with the side of another heat storage container 12 or the sidewall of the battery pack case 2, and is disposed between them in an elastically deformed state. The intake manifold portion 3 and the exhaust manifold portion 4 communicate with each other via the cooling air passage over the sides 15c and 15d of the cooling passage member 15 of the third aspect.

As illustrated in FIG. 1, the cooling source 21 communicates with the intake manifold portion 3 and is attached to the battery pack case 2. The cooling source 21 is used to supply cooling medium, for example, outside air, from the outside of the battery pack 1 to the intake manifold portion 3, and is formed by, for example, an air fan, an air blower, or an air pump. At the time of operations other than charging (for example, during driving of a vehicle in the case of a vehicle battery pack), the cooling source 21 is driven by a control unit (not illustrated) when heat dissipation of the battery pack 1 is requested). In order to discharge the cooling medium to the outside of the battery pack 1, the medium pass port 25 communicates with the exhaust manifold portion 4 and is attached to the battery pack case 2.

With the charging or discharging of the battery pack 1, each of the unit cells 8 of the battery module 6 generates heat. This heat is absorbed by the heat storage member 13 of the heat storage portion 11 that is thermally connected to the module case 7. Thereby, a temperature rise of the unit cells 8 is suppressed.

The cooling source 21, the intake manifold portion 3, the cooling passages 18a and 18b, the exhaust manifold portion 4, and the medium pass port 25, which are included in the battery pack 1, constitute a forced air cooling unit with respect to the heat storage portion 11. As the cooling source 21 of the air cooling unit is driven at timing other than charging, a relatively-low-temperature air outside the battery pack 1 is supplied to the intake manifold portion 3 through the cooling source 21. Along with this, after passing through each of the cooling passages 18a and 18b, the air flows out to the exhaust manifold portion 4 and is discharged to the outside of the battery pack 1 through the medium pass port 25.

The heat storage portion 11 is forcibly air-cooled by the air flow. That is, heat of the heat storage portion 11, whose temperature rises due to the absorption of heat of each of the unit cells 8, is spread to the cooling passages 18a and 18b through the heat storage container 12 and the cooling passage member 15, and is discharged into the air circulated through these passages. Due to such cooling, the temperature of the heat storage member 13 of the heat storage portion 11 may be reduced to a lower state than the battery temperature (temperature of the battery module 7).

The battery pack 1 is charged in such a state that the temperature of the heat storage member 13 is held lower than the battery temperature. Therefore, heat of the unit cells 8 accompanied by charging may be reliably absorbed by the heat storage member 13. Along with this, even though an amount of heat generated from the unit cells 8 during charging is increased, the excessive rise of the battery temperature is suppressed, which may not cause reliability degradation, for example, a reduction in the life of the unit cells 8.

Moreover, in the forced air cooling, the cooling passage member 15 acts as a heat dissipation fin. That is, cooling performance is improved because a heat dissipation area with respect to the cooling passages 18a and 18b is increased by the cooling passage member 15. Furthermore, the cooling passage member 15 also acts as a rectification plate that suppresses the turbulence of air flow.

Moreover, the cooling passage member 15 of the battery pack 1 having the above-described configuration is disposed in the elastically deformed state. Thus, due to an elastic force by which the cooling passage member 15 is to be restored, the heat storage portion 11 is held in a state of being pressed against the battery module 6. Therefore, since a contact surface pressure between the heat storage container 12 of the heat storage portion 11 and the module case 7 is increased, the heat of the battery module 6 may be efficiently absorbed by the heat storage member 13. With this, since a contact surface pressure between the heat storage container 12 and the cooling passage member 15 is also increased, a thermal contact resistance therebetween is reduced. Therefore, the heat of the heat storage member 13 may be efficiently transferred to the cooling passage member 15. Accordingly, the cooling performance is improved.

Also, a density of the heat storage member 13 including the phase change material is changed according to the phase change between a solid state in which the temperature is lower than the melting point and a liquid state in which the temperature is higher than the melting point. Thereby, a volume change accompanied by expansion and contraction occurs in the heat storage member 13.

When the volume of the heat storage member 13 is changed, the heat storage container 12 is deformed accordingly. Thus, elastic deformation occurs in a direction in which the cooling passage member 15 is separated from the heat storage portion 11 (in other words, direction perpendicular to the side of the heat storage container 12 with which the cooling passage member 15 is contacted). Therefore, the volume change of the heat storage member 13 is absorbed.

Hence, a reduction in a contact surface pressure between the heat storage container 12 of the heat storage portion 11 and the module case 7 and a contact surface pressure between the heat storage container 12 and the cooling passage member 15 is suppressed, so a high contact surface voltage is maintained. Therefore, regardless of the volume change of the heat storage member 13, a thermal contact resistance between contact interfaces may be reduced, and an excessive rise of the battery temperature may be suppressed.

### (Second Embodiment)

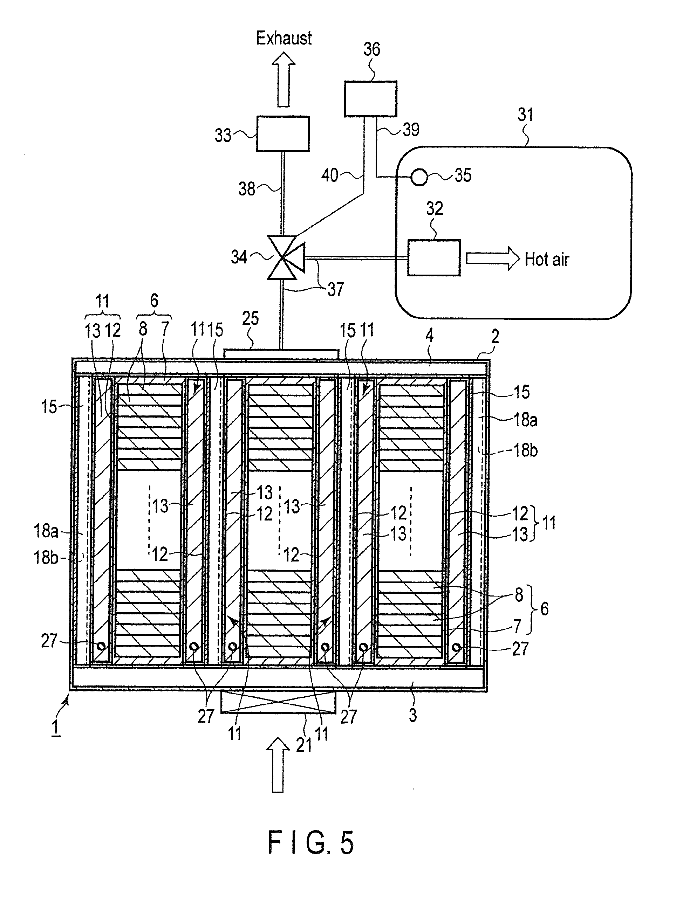

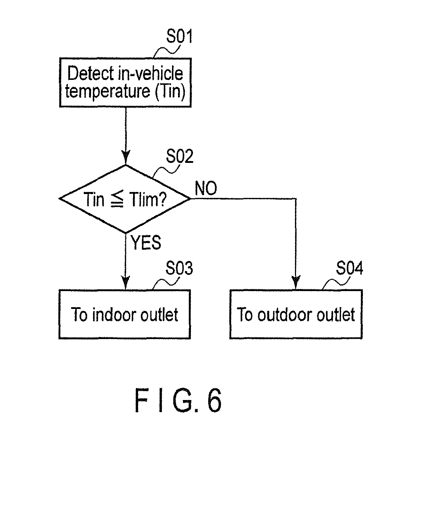

FIGS. 5 and 6 illustrate a second embodiment. The second embodiment is different from the first embodiment in a configuration to be described below, and is identical to the first embodiment in the other configurations. Therefore, the same reference numerals as in the first embodiment are assigned to components exhibiting the same or similar functions of the first embodiment, and a description thereof is omitted.

The second embodiment exemplifies a vehicle heating apparatus that also uses a battery pack 1 as a heat source. The apparatus is mounted on an electric vehicle such as an electric automobile, and a battery pack is mainly used as a power supply of a driving motor that drives the electric vehicle.

As illustrated in FIG. 5, the vehicle heating apparatus includes a battery pack 1, an indoor outlet 32 opened to an in-vehicle space 31, an outdoor outlet 33 opened to the outside of the in-vehicle space 31, a switching valve 34, an in-vehicle temperature detecting unit 35, and a control unit 36.

The battery pack 1 included in the vehicle heating apparatus of the second embodiment uses a heat storage member having a supercooling as the heat storage member 13 of the heat storage portion 11, and includes a nucleation unit 27. The nucleation unit 27 contacts the heat storage member 27 and serves to release the supercooling of the heat storage member 27 being in the supercooled state. As the supercooling is released, the heat storage member 27 generates heat. The nucleation unit 27 includes a unit that applies a voltage between two electrodes, or a leaf spring having unevenness, and an actuator. As the actuator, a unit that moves the leaf spring or a unit that applies a voltage to a thermoelectric element in order for local supercooling may be used.

Except for this, the configuration of the battery pack 1 is identical to the battery pack described above in the first embodiment, including a non-illustrated configuration.

Therefore, the effect of the battery pack 1 described in the first embodiment may be obtained. That is, even though an amount of heat generated from the unit cells 8 during charging of the battery pack 1 is increased, the excessive rise of the battery temperature is suppressed, which may not cause reliability degradation, for example, a reduction in the life of the unit cells.

Also, in the second embodiment, the nucleation unit 27 of the battery pack 1 is used to crystallize (solidify) the heat storage member 13, which is dissolved into a liquid state, by providing, for example, electrical stimulus to the supercooled heat storage member 13.

The medium pass port 25 of the battery pack 1 and the indoor outlet 32 are connected through a first pipe 37. Thus, the cooling passages 18a and 18b of the battery pack 1 and the indoor outlet 32 may communicate with each other. The medium pass port 25 and the outdoor outlet 33 are connected through a second pipe 38 branched from the first pipe 37. Thus, the cooling passages 18a and 18b and the outdoor outlet 33 may communicate with each other.

The switching valve 34 is disposed at a connection portion between the first pipe 37 and the second pipe 38. The switching valve 34 may be configured to select a first switching state and a second switching state. The switching state selection of the switching valve 34 may be manually operated, but an electromagnetic drive type switching valve 34, which automatically performs the switching state selection, is used in the second embodiment.

When the switching valve 34 selects the first switching state, the medium pass port 25 and the indoor outlet 32 communicate with each other, and the communication between the medium pass port 25 and the outdoor outlet 33 is cut off. On the contrary, when the switching valve 34 selects the second switching state, the medium pass port 25 and the outdoor outlet 33 communicate with each other, and the communication between the medium pass port 25 and the indoor outlet 32 is cut off.

The in-vehicle temperature detecting unit 35 detects the temperature of the in-vehicle space 31 and is provided with, for example, a temperature sensor installed to face the in-vehicle space 31. Since the in-vehicle temperature detecting unit 35 is electrically connected to the control unit 36 through a first wire 39, detection information (in-vehicle temperature) of the in-vehicle temperature detecting unit 35 is provided to the control unit 36.

The control unit 36 is responsible for controlling the state switching of the switching valve 34, based on in-vehicle temperature input thereto. The control unit 36 is electrically connected to the switching valve 34 through a second wire 40. The control unit 36 is provided as part of a controller that is mounted on a vehicle and responsible for electrical control of the whole vehicle, but the control unit 36 may be provided separately from the controller.

Next, the operation of the vehicle heating apparatus of the second embodiment will be described below with reference to a flowchart of FIG. 6.

In periods other than charging, in-vehicle temperature Tin detected by the in-vehicle temperature detecting unit 35 (step S01) is transmitted to the control unit 36. Based on this, the control unit 36 determines whether the in-vehicle temperature Tin is below a reference value Tlim of a temperature preset in a comparing unit included in the control unit 36 (step S02).

When the in-vehicle temperature Tin is below the reference value Tlim, the determination of step S02 is YES and the control unit 36 executes step S03. Therefore, the forced air cooling operation of the battery pack 1 is started, and the switching valve 34 become the first switching state, so that the medium pass port 25 and the indoor outlet 32 communicate with each other and the communication between the medium pass port 25 and the outdoor outlet 33 is cut off. Thus, cooling medium forcibly discharged from the battery pack 1 (that is, air whose temperature is raised because the heat of the heat storage member 13 of the heat storage portion 11 is discharged) is guided from the battery pack 1 through the first pipe 37, is blown out from the indoor outlet 32 to the in-vehicle space 31, and is supplied for heating of the in-vehicle space 31.

When the in-vehicle temperature Tin is below the reference value Tlim, heat absorbed by the heat storage member 13 during charging and driving is dissipated at periods other than charging, and the heated air is supplied to the in-vehicle space 31, which may reduce power consumption necessary for heating of the in-vehicle space 31.

Also, in periods other than charging, when the in-vehicle temperature Tin is above the reference value Tlim, the determination of step S02 is NO and the control unit 36 executes step S04. Therefore, the forced air cooling operation of the battery pack 1 is started, and the switching valve 34 become the second switching state, so that the medium pass port 25 and the outdoor outlet 33 communicate with each other and the communication between the medium pass port 25 and the indoor outlet 32 is cut off. Thus, cooling medium forcibly discharged from the battery pack 1 (that is, air whose temperature is raised because the heat of the heat storage member 13 of the heat storage portion 11 is discharged) is not guided to the in-vehicle space 31, and is blown out from the outdoor outlet 33 to the outside of the in-vehicle space 31 through a part of the first pipe 37 and the second pipe 38.

In this manner, by discharging heat to the outside of the in-vehicle space 31, the temperature rise of the in-vehicle space 31 is suppressed. Hence, a load is reduced when the in-vehicle space 31 is cooled by, for example, a heat pump type air conditioner, and accordingly, power consumption necessary for cooling may be reduced.

The heating performance of the vehicle is most required at the time of startup, that is, at the time of starting driving the vehicle. In the electric vehicle, the period when heat of the battery pack 1 is generated and the period when the indoor heating is required may be different according to the operation state of the electric vehicle. For example, charging having highest heat generation of the battery is performed using midnight power, and the vehicle is driven next day.

In this case, the heat storage member 13 of the heat storage portion 11 included in the battery pack 1 having the above-described configuration maintains the heat of the battery module 6, which is generated by the charging with the midnight power, until next day by using the supercooled state. That is, the heat storage member 13 absorbs the heat of the battery module 6 and becomes a liquid state, but the heat storage member 13 has a supercooling. Therefore, the heat storage member 13 is not solidified even when the temperature is below the melting point according to the temperature drop after the midnight charging, and the heat storage member 13 may maintain the supercooled liquid state (that is, a state in which latent heat is accumulated). Therefore, by operating the nucleation unit 27 during startup next day, the supercooled heat storage member 13 may be nucleated and crystallized. With this, latent heat is dissipated.

Therefore, with the startup of the vehicle, by driving the cooling source 21 of the battery pack 1 and the nucleation unit 27, the heat (latent heat) accumulated in the heat storage member 13 is discharged into the air sent from the cooling source 21, and the heated air may be supplied to the in-vehicle space 31.

### (Third Embodiment)

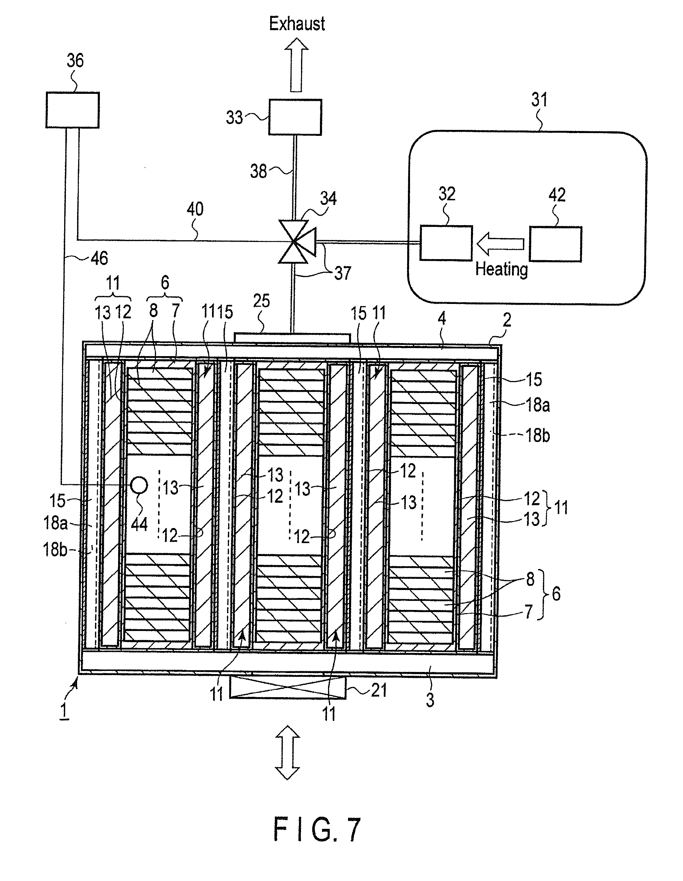

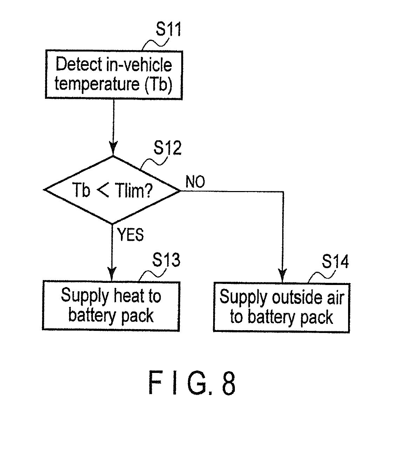

FIGS. 7 and 8 illustrate a third embodiment. The third embodiment is different from the first embodiment in a configuration to be described below, and is identical to the first embodiment in the other configurations. Therefore, the same reference numerals as in the first embodiment are assigned to components exhibiting the same or similar functions of the first embodiment, and a description thereof is omitted.

The third embodiment exemplifies a vehicle heating apparatus that also uses a battery pack 1 as a heat source. The apparatus is mounted on an electric vehicle such as an electric automobile, and a battery pack is mainly used as a power supply of a driving motor that drives the electric vehicle.

As illustrated in FIG. 7, the vehicle heating apparatus includes a battery pack 1, an indoor outlet 32 opened to an in-vehicle space 31, an outdoor outlet 33 opened to the outside of the in-vehicle space 31, a switching valve 34, an in-vehicle heating unit 42, and a control unit 36. The in-vehicle heating unit 42 is used to increase the in-vehicle temperature by supplying hot air to the in-vehicle space 31, and is configured by an electric heater or a heat pump type air conditioner.

The battery pack 1 of the third embodiment includes a battery temperature detecting unit 44 provided with, for example, a temperature sensor that detects the temperature of the battery module 6. The battery temperature detecting unit 44 is electrically connected to the control unit 36 through a third wire 48, detection information (battery temperature) of the battery temperature detecting unit 44 is provided to the control unit 36. Also, the cooling source 21 of the battery pack 1 of the third embodiment is provided with an air fan or an air pump that is rotatable clockwise or counterclockwise by changing a direction of an electric current supplied thereto. Except for this, the configuration of the battery pack 1 is identical to the battery pack described above in the first embodiment, including a non-illustrated configuration.

Therefore, the effect of the battery pack 1 described in the first embodiment may be obtained. That is, even though an amount of heat generated from the unit cells 8 during charging of the battery pack 1 is increased, the excessive rise of the battery temperature is suppressed, which may not cause reliability degradation, for example, a reduction in the life of the unit cells.

The medium pass port 25 of the battery pack 1 and the indoor outlet 32 are connected through a first pipe 37. Thus, the cooling passages 18a and 18b of the battery pack 1 and the indoor outlet 32 may communicate with each other. The medium pass port 25 and the outdoor outlet 33 are connected through a second pipe 38 branched from the first pipe 37. Thus, the cooling passages 18a and 18b and the outdoor outlet 33 may communicate with each other.

The switching valve 34 is disposed at a connection portion between the first pipe 37 and the second pipe 38. The switching valve 34 may be configured to select a first switching state and a second switching state. The switching state selection of the switching valve 34 may be manually operated, but an electromagnetic drive type switching valve 34, which automatically performs the switching state selection, is used in the third embodiment.

When the switching valve 34 selects the first switching state, the medium pass port 25 and the indoor outlet 32 communicate with each other, and the communication between the medium pass port 25 and the outdoor outlet 33 is cut off. On the contrary, when the switching valve 34 selects the second switching state, the medium pass port 25 and the outdoor outlet 33 communicate with each other, and the communication between the medium pass port 25 and the indoor outlet 32 is cut off.

The control unit 36 is responsible for controlling the state switching of the switching valve 34, based on battery temperature input thereto. The control unit 36 is electrically connected to the switching valve 34 through a second wire 40. The control unit 36 is provided as part of a controller that is mounted on a vehicle and responsible for electrical control of the whole vehicle, but the control unit 36 may be provided separately from the controller.

Next, the operation of the vehicle heating apparatus of the third embodiment will be described below with reference to a flowchart of FIG. 7.

In a state in which the in-vehicle heating unit 42 is operated and the in-vehicle space 31 is in a heated state, battery temperature Tb detected by the battery temperature detecting unit 44 (step S11) is transmitted to the control unit 36. Based on this, the control unit 36 determines whether the battery temperature Tb is below a reference value Tlim of a temperature preset in a comparing unit included in the control unit 36 (step S12).

When the battery temperature Tb is below the reference value Tlim, the determination of step S12 is YES and the control unit 36 executes step S13. Therefore, the cooling source 21 is driven in a battery heating mode, and the switching valve 34 become the first switching state, so that the medium pass port 25 and the indoor outlet 32 communicate with each other and the communication between the medium pass port 25 and the outdoor outlet 33 is cut off. Therefore, the cooling source 21 driven in the battery heating mode suctions air inside the battery pack 1 and discharges the suctioned air to the outside of the battery pack 1.

Thus, the air of the in-vehicle space 31 heated by the in-vehicle heating unit 42 is circulated through the first pipe 37 → the medium pass port 25 → the exhaust manifold portion 4 → the cooling passages 18a and 18b → the intake manifold portion 3 → the cooling source 21. Therefore, the heat of the heated air passing through the cooling passages 18a and 18b is accumulated in the heat storage member 13 of the heat storage portion 11, and the battery module 6 is heated by the heat of the heat storage member 13.

When the vehicle is started up in cold weather such as winter, the battery pack 1 is in a cold state. Since the battery temperature is low, the output voltage of the battery pack 1 tends to be decreased. Therefore, as described above, the battery module 6 is heated by introducing the warm air of the in-vehicle space 31 into the battery pack 1, which may suppress a decrease in the output voltage from the battery pack 1.

In this case, at the time of starting up the vehicle under cold condition, the in-vehicle space also needs to be heated at the same time. Thus, the continuous heating of the battery pack 1 by the warm air for a relatively long time deteriorates a rapid in-vehicle heating. However, the heat storage member 13 of the heat storage portion 11 may accumulate heat of the warm air. Therefore, if the heat is accumulated in the heat storage member 13 prior to the startup, it is possible to keep it warm after the startup by heating the battery module 6 with the heat of the heat storage member 13. In this manner, it is possible to suppress the problem that the rapid heating of the in-vehicle temperature at the time of startup is deteriorated, and it is possible to suppress the power consumption necessary for heating. Therefore, if the above-described heat supply from the in-vehicle heating unit 42 to the battery pack 1 is performed during the charging of the battery pack 1, it is possible to suppress the above-described problems during the driving of the vehicle (the deterioration in the rapid heating of the in-vehicle temperature and the increase of the power consumption).

Also, when the control unit 36 switches the switching valve 34 to the first switching state and drives the cooling source 21 such that the air outside the battery pack 1 is suctioned into the battery pack 1, air circulated through the cooling passages 18a and 18b within the battery pack 1 is heat-exchanged with the heat storage portion 11. After the heat exchange, cooling medium forcibly discharged from the battery pack 1 (that is, air whose temperature is raised because the heat of the heat storage member 13 of the heat storage portion 11 is discharged) is guided from the battery pack 1 through the first pipe 37, is blown out from the indoor outlet 32 to the in-vehicle space 31, and is supplied for heating of the in-vehicle space 31.

Also, when the battery temperature Tb is above the reference value Tlim, the determination of step S12 is NO and the control unit 36 executes step S14. Thus, the cooling source 21 is driven such that the air outside the battery pack 1 is suctioned into the battery pack 1. With this, the switching valve 34 becomes the second switching state, the medium pass port 25 and the outdoor outlet 33 communicate with each other, and the communication between the medium pass port 25 and the indoor outlet 32 is cut off.

Therefore, cooling medium forcibly discharged from the battery pack 1 (that is, air whose temperature is raised because the heat of the heat storage member 13 of the heat storage portion 11 is discharged) is not guided to the in-vehicle space 31, and is blown out from the outdoor outlet 33 to the outside of the in-vehicle space 31 through a part of the first pipe 37 and the second pipe 38.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery pack **characterized by** comprising:
a battery module (6) that houses unit cells;
a heat storage portion (11) including a heat storage member (13) that absorbs heat when changing from solid to liquid and dissipates heat when changing from liquid to solid, and a heat storage container that houses the heat storage member (13) and is thermally connected to the battery module;
cooling passages (18a, 18b) through which heat of the heat storage portion is spread and discharged; and
a cooling source (21) that circulates cooling medium to the cooling passages.

2. The battery pack according to claim 1, **characterized by** further comprising a cooling passage member (15) that forms the cooling passages (18a, 18b), and is thermally connected to the heat storage container (12), so that the heat storage portion (11) is interposed between the cooling passage member (15) and the battery module (6).

3. The battery pack according to claim 2, **characterized in that** the cooling passage member (15) is disposed in an elastically deformed state in a direction perpendicular to a side of the heat storage container (12) with which the cooling passage member (15) is contacted.

4. The battery pack according to any one of the preceding claims, **characterized in that** the heat storage member (13) includes a heat storage material including a supercooling, and the battery back further comprises a nucleation unit that crystallizes the supercooled heat storage member (13).

5. A vehicle heating apparatus **characterized by** comprising:
a battery pack according to any one of the preceding claims;
an indoor outlet (32) that communicates with cooling passages (18a, 18b);
an outdoor outlet (33) that communicates with the cooling passages (18a, 18b); and
a switching valve (34) that selectively communicates the indoor outlet (32) or the outdoor outlet (33) with the cooling passages (18a, 18b).

6. The vehicle heating apparatus according to claim 5, **characterized by** further comprising:
an in-vehicle temperature detecting unit (35) that detects a temperature of an in-vehicle space (31); and
a control unit (36) that controls the switching valve (34) such that the cooling passages (18a, 18b) and the indoor outlet (32) communicate with each other when an in-vehicle temperature detected by the in-vehicle temperature detecting unit (35) is below a set value, and controls the switching valve (34) such that the cooling passages (18a, 18b) and the outdoor outlet (33) communicate with each other when the in-vehicle temperature detected by the in-vehicle temperature detecting unit (35) is above the set value.

7. The battery pack according to any one of the preceding claims 1 to 4, **characterized by** further comprising a battery temperature detecting unit (44) that detects a temperature of the battery module (6), wherein the cooling source (21) is driven when the temperature of the battery detected by the battery temperature detecting unit (44) is above a set value.

8. The vehicle heating apparatus according to claim 5 or 6, **characterized by** further comprising:
a battery pack according to claim 7;
an indoor outlet (32) that communicates with cooling passages (18a, 18b);
an outdoor outlet (33) that communicates with the cooling passages (18a, 18b);
a switching valve (34) that selectively communicates the indoor outlet (32) or the outdoor outlet (33) with the cooling passages (18a, 18b);
an in-vehicle heating unit (42) that increases a temperature of an in-vehicle space; and
a control unit (36) that controls the switching valve (34) such that the cooling passages (18a, 18b) and the indoor outlet (32) communicate with each other when a battery temperature detected by the battery temperature detecting unit (44) is below a set value, and drives the cooling source (21) such that air of the in-vehicle space (31), which is heated by the in-vehicle heating unit (42), flows back to the cooling passages (18a, 18b).
